# EUROPÄISCHE PATENTANMELDUNG

(11) **EP 4 620 916 A1**
(43) Veröffentlichungstag der Anmeldung: **24.09.2025**
(21) Anmeldenummer: 24165533.1
(22) Anmeldetag: 22.03.2024
(51) Int. Cl.: C01D 15/02, C01D 15/08, C22B 3/00, C22B 3/44

(54) **VERFAHREN ZUR HERSTELLUNG VON LIOH**

(71) Anmelder: Prime Lithium AG, 22763 Hamburg (DE)
(72) Erfinder: HEITMANN, Axel, 22763 Hamburg (DE); WAGNER, Paul, 22763 Hamburg (DE); SCHNEIDER, Christian, 22763 Hamburg (DE); HUBER, Michael, 22763 Hamburg (DE); JUHLKE, Tobias, 22763 Hamburg (DE)
(74) Vertreter: Altmann Stößel Dick Patentanwälte PartG mbB

(57) **Zusammenfassung**

Die vorliegende Erfindung betrifft ein Verfahren zur Herstellung von LiOH umfassend (1) Bereitstellung einer Mischung A enthaltend Li₂CO₃; (2) Behandlung der in (1) bereitgestellten Mischung A mit Kohlensäure unter mindestens teilweiser Umsetzung des darin enthaltenen Li₂CO₃ zu LiHCO₃ und Erhalt einer Mischung B enthaltend LiHCO₃; (3) Thermische Umwandlung mindestens eines Teils der in (2) erhaltenen Mischung B und Erhalt einer Mischung C enthaltend Li₂CO₃; (4) Umsetzung der in (3) enthaltenen Mischung C mit M(OH)₂ unter mindestens teilweiser Umsetzung des darin enthaltenen Li₂CO₃ zu LiOH und Erhalt einer Mischung D enthaltend LiOH, wobei M für ein Erdalkalimetall steht.

## Beschreibung

### TECHNISCHES GEBIET

Die vorliegende Erfindung betrifft ein Verfahren zur Gewinnung von Lithiumhydroxid aus lithiumhaltigen Mineralien.

### EINLEITUNG

WO 2019/220004 A1 betrifft ein Verfahren zur Gewinnung von Lithiumhydroxid aus einem lithiumhaltigen Mineral durch Mischen des Minerals mit Wasser und einem Alkalimetallcarbonat, Auslaugung der erhaltenen Mischung bei erhöhter Temperatur und einer anschließenden zweiten Auslaugung in einer wässrigen Lösung, die ein Erdalkalimetallhydroxid enthält.

WO 2018/234614 A1 betrifft ein Verfahren zur Herstellung von Lithiumcarbonat aus lithiumhaltigen Mineralien. Das Verfahren umfasst einen Auslaugungsschritt, bei dem das lithiumhaltige Mineral in einer wässrigen Lösung, die Alkalicarbonat enthält, ausgelaugt wird, einen Karbonisierungsschritt, bei dem die Auslaugungsaufschlämmung mit einer Erdalkalimetallverbindung in Gegenwart von CO₂ umgesetzt wird, und einen Fest-Flüssig-Trennungsschritt, bei dem die karbonisierte Mischung einer Fest-Flüssig-Trennung unterzogen wird.

EP 2749535 A1 betrifft ein Verfahren zur Herstellung von hochreinem Lithiumcarbonat. Das Verfahren umfasst die Umsetzung einer ersten wässrigen Lösung, die Lithiumcarbonat und CO₂ enthält, um eine zweite wässrige Lösung zu bilden, welche gelöstes LiHCO₃ enthält, die unter Verwendung eines Gas-Flüssig-Fest-Trenners weiter aufgetrennt wird, um eine dritte wässrige Lösung zu erhalten. Die dritte wässrige Lösung wird mit einem ionenselektiven Medium in Kontakt gebracht, um eine vierte wässrige Lösung zu erzeugen, aus der hochreines Lithiumcarbonat ausgefällt wird.

CN 101948124 B betrifft ein Verfahren zur Gewinnung von Lithiumcarbonat aus Spodumen, bei dem in einem ersten Schritt Alpha-Spodumen in Beta-Spodumen umgewandelt wird, welches weiter mit einem alkalischen Salz und Wasser ausgelaugt wird, wodurch Lithiumcarbonat erhalten wird. Das Lithiumcarbonat wird weiter mit CO₂ umgesetzt und in Lithiumbicarbonat umgewandelt, das thermisch weiter behandelt wird, um Lithiumcarbonat zu erhalten.

WO 2011/148040 A1 betrifft ein Verfahren zur thermischen Verarbeitung von Alpha-Spodumen zu Beta-Spodumen. Das Verfahren umfasst die Verarbeitung von Konzentrat oder Erz in einem Wirbelschichtreaktor bei Temperaturen von 800 bis 100 °C unter Verwendung eines sauerstoffhaltigen Gases.

CN 103183366 A betrifft ein Verfahren zur Gewinnung von Lithiumsalzen aus Spodumen durch Natronlaugung und anschließende Säureumwandlung der erhaltenen Lithiumcarbonate in lösliche Lithiumsalze.

CN 113428882 A betrifft ein Verfahren zur Herstellung von Lithiumcarbonat in Batteriequalität aus Spodumen.

Obwohl es bereits zahlreiche Verfahren zur Herstellung von Lithiumhydroxid aus Spodumen gibt, ist der Bedarf nach einer weiteren Optimierung des Prozesses nach wie vor gegeben. Zur Deckung des steigenden Bedarfes an Lithiumhydroxid in hoher Reinheit zur Herstellung von Batterien sind dabei insbesondere die folgenden Punkte zu berücksichtigen:
- Herstellung von Lithiumhydroxid in konstant hoher Reinheit, was die Fertigung leistungsstarker und langlebiger Batterien erlaubt
- Optimierung der Herstellprozesse hinsichtlich des Einsatzes von Energie und Rohstoffen

### DETAILLIERTE BESCHREIBUNG

Daher war es ein Ziel der vorliegenden Erfindung, ein neues, effizienteres und umweltfreundlicheres Verfahren zur Behandlung von lithiumhaltigen Mineralien zur Gewinnung von Lithiumhydroxid in hoher Reinheit bereitzustellen.

Dabei wurde festgestellt, dass die Einleitung von Kohlendioxid in eine lithiumcarbonathaltige Suspension den pH-Wert der flüssigen Phase von 10-11 auf einen Wert von etwa 7,5 absenkt. Es findet also ein Wechsel des pH-Wertes von basisch zu neutral statt, ohne dass prozessfremde Stoffe eingesetzt werden müssen. Hierbei bildet sich besser lösliches Lithiumhydrogencarbonat, welches in der wässrigen Phase verbleibt. Verunreinigungen, die im Basischen löslich sind, können unter diesen Bedingungen ausgefällt und mit dem suspendierten Analcim abgetrennt werden. Weiterhin ist nicht damit zu rechnen, dass Schwermetalle, die im sauren Milieu gelöst werden können, unter diesen Bedingungen aus dem Feststoff herausgelöst werden. Eine Verunreinigung der lithiumhaltigen Lösung durch derartige Verbindungen findet also nicht statt.

Des Weiteren erlaubt diese Reaktionsführung die Abtrennung des Analcims aus dem Reaktionsgemisch, bevor das Erdalkalihydroxid zugegeben wird. Daher wird der Feststoff Analcim unter schonenden Bedingungen abgetrennt, bevor die Reaktionsbedingungen ins stark Basische wechseln. Somit werden unerwünschte Nebenreaktionen vermieden, die bei einer Reaktion von Analcim mit dem Erdalkalihydroxid entstehen.

Durch die Einleitung von Kohlenstoffdioxid, der daraus resultierenden Änderung des pH-Werts und der Überführung der Lithiumspezies in die wässrige Phase können also Verunreinigungen effizienter abgetrennt werden, bzw. deren Bildung wird von Beginn an vermieden. Daher leistet die beschriebene Erfindung einen signifikanten Beitrag zur Verbesserung der Reinheit des Endproduktes Lithiumhydroxid. Außerdem wird die Bandbreite an Rohstoffen (d. h. Lithiumerze unterschiedlicher Provenienz) vergrößert, da Begleitstoffe in alternierenden Gewichtsanteilen effizienter abgetrennt werden können.

Überraschenderweise wurde festgestellt, dass durch die frühzeitige Abtrennung von Analcim unerwünschte Nebenreaktionen von Analcim mit dem Erdalkalimetall vermieden werden können. Ferner wurde festgestellt, dass durch die Abtrennung von Analcim im neutralen pH-Bereich Verunreinigungen abgetrennt werden können, die im Basischen löslich sind. Insbesondere ist es ein Ziel der vorliegenden Erfindung, ein Verfahren zur Gewinnung von Lithiumhydroxid mit hoher Ausbeute und hoher Reinheit bereitzustellen.

Die vorliegende Erfindung betrifft ein Verfahren zur Herstellung von LiOH umfassend
(1) Bereitstellung einer Mischung A enthaltend Li₂CO₃;
(2) Behandlung der in (1) bereitgestellten Mischung A mit Kohlensäure unter mindestens teilweiser Umsetzung des darin enthaltenen Li₂CO₃ zu LiHCO₃ und Erhalt einer Mischung B enthaltend LiHCO₃;
(3) Thermische Umwandlung mindestens eines Teils der in (2) erhaltenen Mischung B und Erhalt einer Mischung C enthaltend Li₂CO₃;
(4) Umsetzung der in (3) enthaltenen Mischung C mit M(OH)₂ unter mindestens teilweiser Umsetzung des darin enthaltenen Li₂CO₃ zu LiOH und Erhalt einer Mischung D enthaltend LiOH, wobei M für ein Erdalkalimetall steht.

Es ist bevorzugt, dass der Li₂CO₃-Gehalt der Mischung in A in (1) im Bereich von 0,1 bis 16,0 Gew.-%, bevorzugt im Bereich von 5 bis 12 Gew.-% liegt.

Es ist bevorzugt, dass der Li-Gehalt der Mischung in A in (1), berechnet als elementares Lithium, im Bereich von 0,10 bis 3,00 Gew.-%, bevorzugt im Bereich von 0,80 bis 2,25 Gew.-% liegt.

Alternativ dazu ist es bevorzugt, dass die Mischung A weiterhin Wasser umfasst, und der Wassergehalt der Mischung A in (1) im Bereich von 50 bis 90 Gew.-%, bevorzugt im Bereich von 60 bis 70 Gew.-%, liegt. Ferner, ist es bevorzugt, dass der Li₂CO₃-Gehalt der Mischung A in (1) im Bereich von 0,01 bis 8,0 Gew.-%, bevorzugt im Bereich von 1 bis 5 Gew.-%, liegt.

Es ist bevorzugt, dass die Bereitstellung der Mischung A nach (1) umfasst
(1.a) Bereitstellung einer Mischung M0 enthaltend ein oder mehrere lithiumhaltige Minerale;
(1.b) Kalzinieren der Mischung M0 unter Erhalt einer Mischung M1 enthaltend ein oder mehrere kalzinierte lithiumhaltige Minerale;
(1.c) Umsetzung der in (b) erhaltenen Mischung M1 mit einem Alkalimetallcarbonat, unter mindestens teilweiser Umsetzung des einen oder der mehreren kalzinierten lithiumhaltigen Minerals zu Li₂CO₃ und Erhalt einer Mischung A enthaltend Li₂CO₃.

Im Falle, dass das Verfahren die Schritte (1.a) bis (1.c) umfasst, ist es bevorzugt, dass die Mischung M0 ein oder mehrere lithiumhaltige Minerale im Bereich von 50 bis 100 Gew.-%, bevorzugt im Bereich von 60 bis 95 Gew.-%, enthält.

Ferner, ist es bevorzugt, dass das eine oder die mehreren lithiumhaltigen Minerale aus der Gruppe bestehend aus Spodumen, Petalit, Lepidolit oder Mischungen davon ausgewählt sind, wobei das eine oder die mehreren lithiumhaltigen Minerale bevorzugt Spodumen sind, wobei das eine oder die mehreren lithiumhaltigen Minerale besonders bevorzugt alpha-Spodumen sind.

Ferner, ist es bevorzugt, dass während der Kalzinierung in (1.b) die Temperatur im Bereich von 800 bis 1500 °C, bevorzugt im Bereich von 950 bis 1100 °C, liegt.

Ferner, ist es bevorzugt, dass die Kalzinierung in (1.b) für eine Zeitspanne im Bereich von 0,1 bis 16 h, bevorzugt im Bereich von 0,5 bis 5 h, durchgeführt wird.

Ferner, ist es bevorzugt, dass das eine oder die mehreren kalzinierten lithiumhaltigen Minerale aus der Gruppe bestehend aus Spodumen, Petalit, Lepidolit oder Mischungen davon ausgewählt sind, wobei das eine oder die mehreren kalzinierten lithiumhaltigen Minerale bevorzugt Spodumen sind, wobei das eine oder die mehreren kalzinierten lithiumhaltigen Minerale besonders bevorzug beta-Spodumen sind.

Ferner, ist es bevorzugt, dass das Alkalimetallcarbonat aus der Gruppe bestehend aus Natriumcarbonat, Kaliumcarbonat oder Mischungen davon ausgewählt ist, wobei das Alkalimetallcarbonat bevorzugt Natriumcarbonat ist.

Ferner, ist es bevorzugt, dass das Gewichtsverhältnis des einen oder der mehreren kalzinierten lithiumhaltigen Minerale zu Alkalimetallcarbonat in (1.c) im Bereich von 1:0,1 bis 1:2, bevorzugt im Bereich von 1:0,1 bis 1:0,4, liegt.

Ferner, ist es bevorzugt, dass das Molverhältnis von Lithium zu Natrium, berechnet als elementares Lithium und Natrium, in (1.c) im Bereich von 1:0,4 bis 1:8, bevorzugt im Bereich von 1:0,9 bis 1:1,6, liegt.

Ferner, ist es bevorzugt, dass während der Umsetzung in (1.c) die Temperatur im Bereich von 150 bis 350°C, bevorzugt im Bereich von 200 bis 250 °C, liegt.

Ferner, ist es bevorzugt, dass während der Umsetzung in (1.c) der Druck im Bereich von 10 bis 200 bar (absolut), bevorzugt im Bereich von 20 bis 50 bar (absolut), liegt.

Ferner, ist es bevorzugt, dass die Umsetzung in (1.c) für eine Zeitspanne im Bereich von 0,1 bis 8 h, bevorzugt im Bereich von 0,5 bis 1,5 h, durchgeführt wird.

Ferner, ist es bevorzugt, dass die Umsetzung in (1.c) Wasser, bevorzugt wässrige Alkalicarbonatlösung, umfasst.

Ferner, ist es bevorzugt, dass das Verfahren umfasst
(1.d) Abtrennung mindestens eines Teils des nicht umgesetzten Alkalimetallcarbonats aus der in (1.c) erhaltenen Mischung A und Erhalt einer Mischung M2 enthaltend nicht umgesetztes Alkalimetallcarbonat;
(1.e) Bereitstellung der Mischung M2 für die Umsetzung in (1.c) als Quelle für Alkalimetallcarbonat.

Alternativ dazu ist es bevorzugt, dass die Bereitstellung der Mischung A nach (1) umfasst
(1.a') Bereitstellung einer Mischung M0' enthaltend ein oder mehrere lithiumhaltige Minerale;
(1.b') Umsetzung der Mischung M0' mit einem Alkalimetallcarbonat unter mindestens teilweiser Umsetzung des einen oder der mehreren lithiumhaltigen Minerale zu Lᵢ₂CO₃ und Erhalt einer Mischung A enthaltend Li₂CO₃.

Im Falle, dass das Verfahren die Schritte (1.a`) und (1.b`) umfasst, ist es bevorzugt, dass die Mischung M0' das eine oder die mehreren lithiumhaltigen Minerale im Bereich von 50 bis 100 Gew.-%, bevorzugt im Bereich von 60 bis 95 Gew.-%, enthält.

Ferner, ist es bevorzugt, dass der Li-Gehalt der Mischung M0', berechnet als elementares Lithium, im Bereich von 0,03 bis 4,0 Gew.-%, bevorzugt im Bereich von 2,00 bis 3,75 Gew.-%, liegt.

Ferner, ist es bevorzugt, dass das eine oder die mehreren lithiumhaltigen Minerale aus der Gruppe bestehend aus Spodumen, Petalit, Lepidolit oder Mischungen davon ausgewählt sind, wobei das eine oder die mehreren lithiumhaltigen Minerale bevorzugt Spodumen sind, wobei das eine oder die mehreren lithiumhaltigen Minerale besonders bevorzugt alpha-Spodumen sind.

Ferner, ist es bevorzugt, dass das Alkalimetallcarbonat aus der Gruppe bestehend aus Natriumcarbonat, Kaliumcarbonat oder Mischungen davon ausgewählt ist, wobei das Alkalimetallcarbonat bevorzugt Natriumcarbonat ist.

Ferner, ist es bevorzugt, dass in (1.b') das Gewichtsverhältnis von dem einen oder den mehreren lithiumhaltigen Mineralen zu Alkalimetallcarbonat im Bereich von 1:0,1 bis 1:2, bevorzugt im Bereich von 1:0,2 bis 1:0,4, liegt.

Ferner, ist es bevorzugt, dass das Molverhältnis von Lithium zu Natrium, berechnet als elementares Lithium und Natrium, in (1.b') im Bereich von 1:0,4 bis 1:8, bevorzugt im Bereich von 1:0,9 bis 1:1,4, liegt.

Ferner, ist es bevorzugt, dass die Umsetzung in (1.b') für eine Zeitspanne im Bereich von 0,1 bis 10 h, bevorzugt im Bereich von 1 bis 4 h, durchgeführt wird.

Ferner, ist es bevorzugt, dass die Umsetzung in (1.b`) Wasser, bevorzugt Wasserdampf, umfasst. Im Falle, dass die Umsetzung in (1.b`) Wasser umfasst, ist es bevorzugt, dass während der Umsetzung in (1.b`) der Druck im Bereich von 10 bis 200 bar (absolut), bevorzugt im Bereich von 50 bis 180 bar (absolut), liegt.

Im Falle, dass das Verfahren die Schritte (1.a`) und (1.b`) umfasst, ist es bevorzugt, dass die Umsetzung in (1.b`) umfasst
(1.b'.1) Kalzinieren der Mischung M0' und einem Alkalimetallcarbonat, und Erhalt einer Mischung M1';
(1.b`.2) Umsetzung der in (1.b`.1) erhaltenen Mischung M1', und Erhalt einer Mischung A enthaltend Li₂CO₃.

Im Falle, dass das Verfahren die Schritte (1.b'.1) und (1.b`.2) umfasst, ist es bevorzugt, dass während der Kalzinierung in (1.b'.1) die Temperatur im Bereich von 900 bis 1500 °C, bevorzugt im Bereich von 1000 bis 1200 °C, liegt. Ferner, ist es bevorzugt, dass die Umsetzung in (1.b`.2) Wasser, bevorzugt Wasserdampf, umfasst. Im Falle, dass die Umsetzung in (1.b') Wasser umfasst, ist es bevorzugt, dass während der Umsetzung in (1.b`.2) der Druck im Bereich von 10 bis 200 bar (absolut), bevorzugt im Bereich von 50 bis 180 bar (absolut), liegt.

Im Falle, dass das Verfahren die Schritte (1.a`) und (1.b') umfasst, ist es bevorzugt, dass das Verfahren umfasst
(1.c') Abtrennung nicht umgesetzten Alkalimetallcarbonats aus der in (1.b') enthaltenen Mischung A und Erhalt einer Mischung M2' enthaltend nicht umgesetztes Alkalimetallcarbonat;
(1.d') Bereitstellung der Mischung M2' für die Umsetzung in (1.b') als Quelle für Alkalimetallcarbonat.

Es ist bevorzugt, dass während der Behandlung in (2) die Temperatur im Bereich von 0 bis 150 °C, bevorzugt im Bereich von 15 bis 100 °C, liegt.

Es ist bevorzugt, dass die Behandlung in (2) in wässriger Lösung stattfindet und CO₂ in die wässrige Lösung eingeleitet wird.

Im Falle, dass die Behandlung in (2) in wässriger Lösung stattfindet und CO₂ in die wässrige Lösung eingeleitet wird, ist es bevorzugt, dass CO₂ in die wässrige Lösung mit einem Druck von 1 bis 15 bar (absolut), bevorzugt 1 bis 10 bar (absolut), eingeleitet wird. Gemäß vorliegender Erfindung weißt der Druck des CO₂ auf den Partialdruck hin, mit dem CO₂ in die wässrige Lösung eingeleitet wird, wobei der Partialdruck dem Gesamtdruck des Gasstroms entspricht, wenn CO₂ in reiner Form in die wässrige Lösung eingeleitet wird.

Es ist bevorzugt, dass die Behandlung in (2) umfasst
(2.1) Behandlung der in (1) bereitgestellten Mischung A mit Kohlensäure unter mindestens teilweiser Umsetzung des darin enthaltenen Li₂CO₃ zu LiHCO₃;
(2.2) Fest-Flüssig-Trennschritt der in (2.1) erhaltenen Mischung, und Erhalt einer festen Mischung M4 enthaltend nicht reagiertes Li₂CO₃ und einer flüssigen Mischung B enthaltend LiHCO₃;
(2.3) Bereitstellung der Mischung M4 für die Behandlung in (2) als Quelle für Li₂CO₃.

Es ist bevorzugt, dass der pH-Wert der Mischung B erhalten in (2) im Bereich von 5 bis 8, bevorzugt im Bereich von 6 bis 8, besonders bevorzugt im Bereich von 7 bis 8, liegt.

Es ist bevorzugt, dass die in (2) erhaltene Mischung B weniger als 30,0 Gew.-% Erdalkalimetale, bevorzugt weniger als 20,0 Gew.-% Erdalkalimetalle, besonders bevorzugt weniger als 10,0 Gew.-% Erdalkalimetalle, enthält.

Es ist bevorzugt, dass die in (2) erhaltene Mischung B weniger als 5,0 Gew.-% Erdalkalimetalle, besonders bevorzugt weniger als 3,0 Gew.-% Erdalkalimetalle, besonders bevorzugt weniger als 1,0 Gew.-% Erdalkalimetalle, enthält, wobei die in (2) erhaltene Mischung B besonders bevorzugt frei von Erdalkalimetallen ist.

Es ist bevorzugt, dass die in (2) erhaltene Mischung B weniger als 5,0 Gew.-% Calcium, berechnet als elementares Calcium, bevorzugt weniger als 3,0 Gew.-% Calcium, besonders bevorzugt weniger als 0,1,0 Gew.-% Calcium, enthält, wobei die in (2) erhaltene Mischung B besonders bevorzugt frei von Calcium ist.

Es ist bevorzugt, dass während der thermischen Umwandlung in (3) die Temperatur im Bereich von 50 bis 200 °C, bevorzugt im Bereich von 70 bis 150 °C, besonders bevorzugt im Bereich von 70 bis 110 °C, liegt.

Es ist bevorzugt, dass während der thermischen Umwandlung in (3) der Druck im Bereich von 0,1 bis 10 bar (absolut), bevorzugt im Bereich von bevorzugt im Bereich von 0,2 bis 6 bar (absolut), besonders bevorzugt im Bereich von 0,3 bis 1 bar (absolut) liegt.

Es ist bevorzugt, dass die Umsetzung in (3) weiterhin umfasst
(3.1) Umsetzung eines Teils der in (2) erhaltenen Mischung B mit M(OH)₂ unter mindestens teilweiser Umsetzung des darin enthaltenen LiHCOs zu LiOH und Erhalt einer Mischung D' enthaltend LiOH, wobei M für ein Erdalkalimetall steht.

Im Falle, dass das Verfahren den Schritt (3.1) umfasst, ist es bevorzugt, dass unabhängig voneinander während der Umsetzung in (4) und/oder (3.1) die Temperatur im Bereich von 10 bis 100 °C, bevorzugt im Bereich von 20 bis 60 °C, liegt. Ferner ist es bevorzugt, dass unabhängig voneinander während der Umsetzung in (4) und/oder (3.1) der Druck im Bereich von 0.5 bis 1.5 bar (absolut), bevorzugt im Bereich von 0.8 bis 1.2 bar (absolut), liegt.

Es ist bevorzugt, dass während der thermischen Umwandlung in (3) die Temperatur im Bereich von 50 bis 200 °C, bevorzugt im Bereich von bis 70 bis 150 °C, besonders bevorzugt im Bereich von 70 bis 110 °C, liegt.

Es ist bevorzugt, dass während der thermischen Umwandlung in (3) der Druck im Bereich von 0,1 bis 10 bar (absolut), bevorzugt im Bereich von 0,2 bis 6 bar (absolut), besonders bevorzugt im Bereich von 0,3 bis 1 bar (absolut) liegt.

Es ist bevorzugt, dass unabhängig voneinander das in (4) und/oder in (3.1) verwendete Erdalkalimetallhydroxid M(OH)₂ vor der Umsetzung in (4) und/oder (3.1) Wasser gelöst oder suspendiert wird.

Im Falle, dass das in (3) und/oder (3.2) verwendete Erdalkalimetallhydroxid M(OH)₂ vor der Umsetzung in Wasser gelöst oder suspendiert wird, ist es bevorzugt, dass unabhängig voneinander der Gewichtsanteil an Erdalkalimetallhydroxid M(OH)₂ der wässrigen Lösung bzw. der wässrigen Suspension im Bereich von1 bis 50 Gew.-%, bevorzugt im Bereich 10 bis 30 Gew.-%, liegt.

Es ist bevorzugt, dass unabhängig voneinander das Erdalkalimetall M in (4) und/oder in (3.1) aus der Gruppe bestehend aus Barium, Calcium und Magnesium ausgewählt ist, wobei das Erdalkalimetall M bevorzugt Calcium ist.

Es ist bevorzugt, dass das Verfahren weiter umfasst
(5) Abtrennung von MCO₃ aus der in (4) erhaltenen Mischung D und/oder der in (3.1) erhaltenen Mischung D' unter Erhalt einer Mischung E enthaltend LiOH.

Es ist bevorzugt, dass die Abtrennung in (5) umfasst
(5.1) Fest-Flüssig-Trennschritt der in (4) erhaltenen Mischung D und/oder der in (3.1) erhaltenen Mischung D' und Erhalt einer festen Mischung M5 enthaltend CaCO₃ und einer flüssigen Mischung E enthaltend LiOH;
(5.2) Waschen der in (5.1) erhaltenen festen Mischung M5 mit Wasser und Erhalt von Waschwasser enthaltend LiOH,
(5.3) Bereitstellung mindestens eines Teils des in (5.2) erhaltenen Waschwassers enthaltend LiOH für die Umsetzung in (4), wobei mindestens ein Teil des Waschwassers enthaltend LiOH bevorzugt vor der Rückführung in (4) mit Erdalkalimetallhydroxid M(OH)₂ versetzt wird.

Im Falle, dass das Verfahren die Schritte (5.1) bis (5.3) umfasst, ist es bevorzugt, dass die Abtrennung in (5) weiterhin einen lonenaustausch umfasst, bevorzugt einen kationischen lonenaustausch.

Die vorliegende Erfindung wird durch die folgenden Ausführungsformen und Kombinationen von Ausführungsformen, die sich aus den angegebenen Abhängigkeiten und Rückbezügen ergeben, näher erläutert. Insbesondere wird darauf hingewiesen, dass in jedem Fall, in dem ein Bereich von Ausführungsformen erwähnt wird, z. B. im Zusammenhang mit einem Begriff wie "Das Verfahren einer der Ausführungsformen 1 bis 4", jede Ausführungsform in diesem Bereich für den Fachmann explizit offenbart werden soll, d. h. der Wortlaut dieses Begriffs ist für den Fachmann als Synonym für "Das Verfahren einer der Ausführungsformen 1, 2, 3 und 4" zu verstehen. Ferner wird ausdrücklich darauf hingewiesen, dass die nachfolgende Reihe von Ausführungsbeispielen nicht die den Schutzumfang bestimmende Reihe von Ansprüchen ist, sondern ein geeigneter strukturierter Teil der auf allgemeine und bevorzugte Aspekte der vorliegenden Erfindung gerichteten Beschreibung darstellt.
1. Verfahren zur Herstellung von LiOH umfassend
   (1) Bereitstellung einer Mischung A enthaltend Li₂CO₃;
   (2) Behandlung der in (1) bereitgestellten Mischung A mit Kohlensäure unter mindestens teilweiser Umsetzung des darin enthaltenen Li₂CO₃ zu LiHCO₃ und Erhalt einer Mischung B enthaltend LiHCO₃;
   (3) Thermische Umwandlung mindestens eines Teils der in (2) erhaltenen Mischung B und Erhalt einer Mischung C enthaltend Li₂CO₃;
   (4) Umsetzung der in (3) enthaltenen Mischung C mit M(OH)₂ unter mindestens teilweiser Umsetzung des darin enthaltenen Li₂CO₃ zu LiOH und Erhalt einer Mischung D enthaltend LiOH, wobei M für ein Erdalkalimetall steht.
2. Das Verfahren nach Ausführungsform 1, wobei der Li₂CO₃-Gehalt der Mischung in A in (1) im Bereich von 0,1 bis 16,0 Gew.-%, bevorzugt im Bereich von 5 bis 12 Gew.-% liegt.
3. Das Verfahren nach Ausführungsform 1 oder 2, wobei der Li-Gehalt der Mischung in A in (1), berechnet als elementares Lithium, im Bereich von 0,10 bis 3,00 Gew.-%, bevorzugt im Bereich von 0,80 bis 2,25 Gew.-% liegt.
4. Das Verfahren nach Ausführungsform 1, wobei die Mischung A weiterhin Wasser umfasst, und der Wassergehalt der Mischung A in (1) im Bereich von 50 bis 90 Gew.-%, bevorzugt im Bereich von 60 bis 70 Gew.-%, liegt.
5. Das Verfahren nach Ausführungsform 4, wobei der Li₂CO₃-Gehalt der Mischung A in (1) im Bereich von 0,01 bis 8,0 Gew.-%, bevorzugt im Bereich von 1 bis 5 Gew.-%, liegt.
6. Das Verfahren nach einer der Ausführungsformen 1 bis 5, wobei die Bereitstellung der Mischung A nach (1) umfasst
   (1.a) Bereitstellung einer Mischung M0 enthaltend ein oder mehrere lithiumhaltige Minerale;
   (1.b) Kalzinieren der Mischung M0 unter Erhalt einer Mischung M1 enthaltend ein oder mehrere kalzinierte lithiumhaltige Minerale;
   (1.c) Umsetzung der in (b) erhaltenen Mischung M1 mit einem Alkalimetallcarbonat, unter mindestens teilweiser Umsetzung des einen oder der mehreren kalzinierten lithiumhaltigen Minerals zu Li₂CO₃ und Erhalt einer Mischung A enthaltend Li₂CO₃.
7. Das Verfahren nach Ausführungsform 6, wobei die Mischung M0 ein oder mehrere lithiumhaltige Minerale im Bereich von 50 bis 100 Gew.-%, bevorzugt im Bereich von 60 bis 95 Gew.-%, enthält.
8. Das Verfahren nach Ausführungsform 6 oder 7, wobei das eine oder die mehreren lithiumhaltigen Minerale aus der Gruppe bestehend aus Spodumen, Petalit, Lepidolit oder Mischungen davon ausgewählt sind, wobei das eine oder die mehreren lithiumhaltigen Minerale bevorzugt Spodumen sind, wobei das eine oder die mehreren lithiumhaltigen Minerale besonders bevorzugt alpha-Spodumen sind.
9. Das Verfahren nach einer der Ausführungsformen 6 bis 8, wobei während der Kalzinierung in (1.b) die Temperatur im Bereich von 800 bis 1500 °C, bevorzugt im Bereich von 950 bis 1100 °C, liegt.
10. Das Verfahren nach einer der Ausführungsformen 6 bis 9, wobei die Kalzinierung in (1.b) für eine Zeitspanne im Bereich von 0,1 bis 16 h, bevorzugt im Bereich von 0,5 bis 5 h, durchgeführt wird.
11. Das Verfahren nach einer der Ausführungsformen 6 bis 10, wobei das eine oder die mehreren kalzinierten lithiumhaltigen Minerale aus der Gruppe bestehend aus Spodumen, Petalit, Lepidolit oder Mischungen davon ausgewählt sind, wobei das eine oder die mehreren kalzinierten lithiumhaltigen Minerale bevorzugt Spodumen sind, wobei das eine oder die mehreren kalzinierten lithiumhaltigen Minerale besonders bevorzug beta-Spodumen sind.
12. Das Verfahren nach einer der Ausführungsformen 6 bis 11, wobei das Alkalimetallcarbonat aus der Gruppe bestehend aus Natriumcarbonat, Kaliumcarbonat oder Mischungen davon ausgewählt ist, wobei das Alkalimetallcarbonat bevorzugt Natriumcarbonat ist.
13. Das Verfahren nach einer der Ausführungsformen 6 bis 12, wobei das Gewichtsverhältnis des einen oder der mehreren kalzinierten lithiumhaltigen Minerale zu Alkalimetallcarbonat in (1.c) im Bereich von 1:0,1 bis 1:2, bevorzugt im Bereich von 1:0,1 bis 1:0,4, liegt.
14. Das Verfahren nach einer der Ausführungsformen 6 bis 13, wobei das Molverhältnis von Lithium zu Natrium, berechnet als elementares Lithium und Natrium, in (1.c) im Bereich von 1:0,4 bis 1:8, bevorzugt im Bereich von 1:0,9 bis 1:1,6, liegt.
15. Das Verfahren nach einer der Ausführungsformen 6 bis 14, wobei während der Umsetzung in (1.c) die Temperatur im Bereich von 150 bis 350°C, bevorzugt im Bereich von 200 bis 250 °C, liegt.
16. Das Verfahren nach einer der Ausführungsformen 6 bis 15, wobei während der Umsetzung in (1.c) der Druck im Bereich von 10 bis 200 bar (absolut), bevorzugt im Bereich von 20 bis 50 bar (absolut), liegt.
17. Das Verfahren nach einer der Ausführungsformen 6 bis 16, wobei die Umsetzung in (1.c) für eine Zeitspanne im Bereich von 0,1 bis 8 h, bevorzugt im Bereich von 0,5 bis 1,5 h, durchgeführt wird.
18. Das Verfahren nach einer der Ausführungsformen 6 bis 17, wobei die Umsetzung in (1.c) Wasser, bevorzugt wässrige Alkalicarbonatlösung, umfasst.
19. Das Verfahren nach einer der Ausführungsformen 6 bis 18, umfassend
   (1.d) Abtrennung mindestens eines Teils des nicht umgesetzten Alkalimetallcarbonats aus der in (1.c) erhaltenen Mischung A und Erhalt einer Mischung M2 enthaltend nicht umgesetztes Alkalimetallcarbonat;
   (1.e) Bereitstellung der Mischung M2 für die Umsetzung in (1.c) als Quelle für Alkalimetallcarbonat.
20. Das Verfahren nach einer der Ausführungsformen 1 bis 5, wobei die Bereitstellung der Mischung A nach (1) umfasst
   (1.a') Bereitstellung einer Mischung M0' enthaltend ein oder mehrere lithiumhaltige Minerale;
   (1.b') Umsetzung der Mischung M0' mit einem Alkalimetallcarbonat unter mindestens teilweiser Umsetzung des einen oder der mehreren lithiumhaltigen Minerale zu Lᵢ₂CO₃ und Erhalt einer Mischung A enthaltend Li₂CO₃.
21. Das Verfahren nach Ausführungsform 20, wobei die Mischung M0' das eine oder die mehreren lithiumhaltigen Minerale im Bereich von 50 bis 100 Gew.-%, bevorzugt im Bereich von 60 bis 95 Gew.-%, enthält.
22. Das Verfahren nach Ausführungsform 20 oder 21, wobei der Li-Gehalt der Mischung M0', berechnet als elementares Lithium, im Bereich von 0,03 bis 4,0 Gew.-%, bevorzugt im Bereich von 2,00 bis 3,75 Gew.-%, liegt.
23. Das Verfahren nach einer der Ausführungsformen 20 bis 22, wobei das eine oder die mehreren lithiumhaltigen Minerale aus der Gruppe bestehend aus Spodumen, Petalit, Lepidolit oder Mischungen davon ausgewählt sind, wobei das eine oder die mehreren lithiumhaltigen Minerale bevorzugt Spodumen sind, wobei das eine oder die mehreren lithiumhaltigen Minerale besonders bevorzugt alpha-Spodumen sind.
24. Das Verfahren nach einer der Ausführungsformen 20 bis 23, wobei das Alkalimetallcarbonat aus der Gruppe bestehend aus Natriumcarbonat, Kaliumcarbonat oder Mischungen davon ausgewählt ist, wobei das Alkalimetallcarbonat bevorzugt Natriumcarbonat ist.
25. Das Verfahren nach einer der Ausführungsformen 20 bis 24, wobei in (1.b`) das Gewichtsverhältnis von dem einen oder den mehreren lithiumhaltigen Mineralen zu Alkalimetallcarbonat im Bereich von 1:0,1 bis 1:2, bevorzugt im Bereich von 1:0,2 bis 1:0,4, liegt.
26. Das Verfahren nach einer der Ausführungsformen 20 bis 25, wobei das Molverhältnis von Lithium zu Natrium, berechnet als elementares Lithium und Natrium, in (1.b') im Bereich von 1:0,4 bis 1:8, bevorzugt im Bereich von 1:0,9 bis 1:1,4, liegt.
27. Das Verfahren nach einer der Ausführungsformen 20 bis 26, wobei die Umsetzung in (1.b') für eine Zeitspanne im Bereich von 0,1 bis 10 h, bevorzugt im Bereich von 1 bis 4 h, durchgeführt wird.
28. Das Verfahren nach einer der Ausführungsformen 20 bis 27, wobei die Umsetzung in (1.b') Wasser, bevorzugt Wasserdampf, umfasst.
29. Das Verfahren nach Ausführungsform 28, wobei während der Umsetzung in (1.b') der Druck im Bereich von 10 bis 200 bar (absolut), bevorzugt im Bereich von 50 bis 180 bar (absolut), liegt.
30. Das Verfahren nach einer der Ausführungsformen 20 bis 27, wobei die Umsetzung in (1.b') umfasst
   (1.b'.1) Kalzinieren der Mischung M0' und einem Alkalimetallcarbonat, und Erhalt einer Mischung M1';
   (1.b'.2) Umsetzung der in (1.b`.1) erhaltenen Mischung M1', und Erhalt einer Mischung A enthaltend Li₂CO₃.
31. Das Verfahren nach Ausführungsform 30, wobei während der Kalzinierung in (1.b'. 1) die Temperatur im Bereich von 900 bis 1500 °C, bevorzugt im Bereich von 1000 bis 1200 °C, liegt.
32. Das Verfahren nach Ausführungsform 30 oder 31, wobei die Umsetzung in (1.b'.2) Wasser, bevorzugt Wasserdampf, umfasst.
33. Das Verfahren nach Ausführungsform 32, wobei während der Umsetzung in (1.b'.2) der Druck im Bereich von 10 bis 200 bar (absolut), bevorzugt im Bereich von 50 bis 180 bar (absolut), liegt.
34. Das Verfahren nach einer der Ausführungsformen 20 bis 33, umfassend
   (1.c') Abtrennung nicht umgesetzten Alkalimetallcarbonats aus der in (1.b') enthaltenen Mischung A und Erhalt einer Mischung M2` enthaltend nicht umgesetztes Alkalimetallcarbonat;
   (1.d') Bereitstellung der Mischung M2' für die Umsetzung in (1.b') als Quelle für Alkalimetallcarbonat.
35. Das Verfahren nach einer der Ausführungsformen 1 bis 34, wobei während der Behandlung in (2) die Temperatur im Bereich von 0 bis 150 °C, bevorzugt im Bereich von 15 bis 100 °C, liegt.
36. Das Verfahren nach einer der Ausführungsformen 1 bis 35, wobei die Behandlung in (2) in wässriger Lösung stattfindet und CO₂ in die wässrige Lösung eingeleitet wird.
37. Das Verfahren nach Ausführungsform 36, wobei CO₂ in die wässrige Lösung mit einem Druck von 1 bis 15 bar (absolut), bevorzugt 1 bis 10 bar (absolut), eingeleitet wird.
38. Das Verfahren nach einer der Ausführungsformen 1 bis 37, wobei die Behandlung in (2) umfasst
   (2.1) Behandlung der in (1) bereitgestellten Mischung A mit Kohlensäure unter mindestens teilweiser Umsetzung des darin enthaltenen Li₂CO₃ zu LiHCO₃;
   (2.2) Fest-Flüssig-Trennschritt der in (2.1) erhaltenen Mischung, und Erhalt einer festen Mischung M4 enthaltend nicht reagiertes Li₂CO₃ und einer flüssigen Mischung B enthaltend LiHCO₃;
   (2.3) Bereitstellung der Mischung M4 für die Behandlung in (2) als Quelle für Li₂CO₃.
39. Das Verfahren nach einer der Ausführungsformen 1 bis 38, wobei der pH-Wert der Mischung B erhalten in (2) im Bereich von 5 bis 8, bevorzugt im Bereich von 6 bis 8, besonders bevorzugt im Bereich von 7 bis 8, liegt.
40. Das Verfahren nach einer der Ausführungsformen 1 bis 39, wobei die in (2) erhaltene Mischung B weniger als 30,0 Gew.-% Erdalkalimetale, bevorzugt weniger als 20,0 Gew.-% Erdalkalimetalle, besonders bevorzugt weniger als 10,0 Gew.-% Erdalkalimetalle, enthält.
41. Das Verfahren nach einer der Ausführungsformen 1 bis 40, wobei die in (2) erhaltene Mischung B weniger als 5,0 Gew.-% Erdalkalimetalle, besonders bevorzugt weniger als 3,0 Gew.-% Erdalkalimetalle, besonders bevorzugt weniger als 1,0 Gew.-% Erdalkalimetalle, enthält, wobei die in (2) erhaltene Mischung B besonders bevorzugt frei von Erdalkalimetallen ist.
42. Das Verfahren nach einer der Ausführungsformen 1 bis 41, wobei die in (2) erhaltene Mischung B weniger als 5,0 Gew.-% Calcium, berechnet als elementares Calcium, bevorzugt weniger als 3,0 Gew.-% Calcium, besonders bevorzugt weniger als 0,1,0 Gew.-% Calcium, enthält, wobei die in (2) erhaltene Mischung B besonders bevorzugt frei von Calcium ist.
43. Das Verfahren nach einer der Ausführungsformen 1 bis 42, wobei während der thermischen Umwandlung in (3) die Temperatur im Bereich von 50 bis 200 °C, bevorzugt im Bereich von 70 bis 150 °C, besonders bevorzugt im Bereich von 70 bis 110 °C, liegt.
44. Das Verfahren nach einer der Ausführungsformen 1 bis 43, wobei während der thermischen Umwandlung in (3) der Druck im Bereich von 0,1 bis 10 bar (absolut), bevorzugt im Bereich von bevorzugt im Bereich von 0,2 bis 6 bar (absolut), besonders bevorzugt im Bereich von 0,3 bis 1 bar (absolut) liegt.
45. Das Verfahren nach einer der Ausführungsformen 1 bis 44, wobei die Umsetzung in (3) weiterhin umfasst
   (3.1) Umsetzung eines Teils der in (2) erhaltenen Mischung B mit M(OH)₂ unter mindestens teilweiser Umsetzung des darin enthaltenen LiHCO₃ zu LiOH und Erhalt einer Mischung D' enthaltend LiOH, wobei M für ein Erdalkalimetall steht.
46. Das Verfahren nach einer der Ausführungsformen 1 bis 45, wobei unabhängig voneinander während der Umsetzung in (4) und/oder (3.1) die Temperatur im Bereich von 10 bis 100 °C, bevorzugt im Bereich von 20 bis 60 °C, liegt.
47. Das Verfahren nach einer der Ausführungsformen 1 bis 46, wobei unabhängig voneinander während der Umsetzung in (4) und/oder (3.1) der Druck im Bereich von 0.5 bis 1.5 bar (absolut), bevorzugt im Bereich von 0.8 bis 1.2 bar (absolut), liegt.
48. Das Verfahren nach einer der Ausführungsformen 1 bis 47, wobei während der thermischen Umwandlung in (3) die Temperatur im Bereich von 50 bis 200 °C, bevorzugt im Bereich von bis 70 bis 150 °C, besonders bevorzugt im Bereich von 70 bis 110 °C, liegt.
49. Das Verfahren nach einer der Ausführungsformen 1 bis 48, wobei während der thermischen Umwandlung in (3) der Druck im Bereich von 0,1 bis 10 bar (absolut), bevorzugt im Bereich von 0,2 bis 6 bar (absolut), besonders bevorzugt im Bereich von 0,3 bis 1 bar (absolut) liegt.
50. Das Verfahren nach einer der Ausführungsformen 1 bis 49, wobei unabhängig voneinander das in (4) und/oder in (3.1) verwendete Erdalkalimetallhydroxid M(OH)₂ vor der Umsetzung in (4) und/oder (3.1) Wasser gelöst oder suspendiert wird.
51. Das Verfahren nach Ausführungsform 50, wobei unabhängig voneinander der Gewichtsanteil an Erdalkalimetallhydroxid M(OH)₂ der wässrigen Lösung bzw. der wässrigen Suspension im Bereich von1 bis 50 Gew.-%, bevorzugt im Bereich 10 bis 30 Gew.-%, liegt.
52. Das Verfahren nach einer der Ausführungsformen 1 bis 51, wobei unabhängig voneinander das Erdalkalimetall M in (3) und/oder in (3.2) aus der Gruppe bestehend aus Barium, Calcium und Magnesium ausgewählt ist, wobei das Erdalkalimetall M bevorzugt Calcium ist.
53. Das Verfahren nach einer der Ausführungsformen 1 bis 52, das Verfahren weiter umfassend
   (5) Abtrennung von MCO₃ aus der in (4) erhaltenen Mischung D und/oder der in (3.1) erhaltenen Mischung D' unter Erhalt einer Mischung E enthaltend LiOH.
54. Das Verfahren nach einer der Ausführungsformen 1 bis 53, wobei die Abtrennung in (5) umfasst
   (5.1) Fest-Flüssig-Trennschritt der in (4) erhaltenen Mischung D und/oder der in (3.1) erhaltenen Mischung D' und Erhalt einer festen Mischung M5 enthaltend CaCO₃ und einer flüssigen Mischung E enthaltend LiOH;
   (5.2) Waschen der in (5.1) erhaltenen festen Mischung M5 mit Wasser und Erhalt von Waschwasser enthaltend LiOH,
   (5.3) Bereitstellung mindestens eines Teils des in (5.2) erhaltenen Waschwassers enthaltend LiOH für die Umsetzung in (4), wobei mindestens ein Teil des Waschwassers enthaltend LiOH bevorzugt vor der Rückführung in (4) mit Erdalkalimetallhydroxid M(OH)₂ versetzt wird.
55. Das Verfahren nach Ausführungsform 54, wobei die Abtrennung in (5) weiterhin einen lonenaustausch umfasst, bevorzugt einen kationischen lonenaustausch.

### ZITIERTE LITERATUR

- WO 2019/220004 A1
- WO 2018/234614 A1
- EP 2749535 A1
- CN 101948124 B
- WO 2011/148040 A1
- CN 103183366 A
- CN 113428882 A

## Patentansprüche

1. Verfahren zur Herstellung von LiOH umfassend
(1) Bereitstellung einer Mischung A enthaltend Li₂CO₃;
(2) Behandlung der in (1) bereitgestellten Mischung A mit Kohlensäure unter mindestens teilweiser Umsetzung des darin enthaltenen Li₂CO₃ zu LiHCO₃ und Erhalt einer Mischung B enthaltend LiHCO₃;
(3) Thermische Umwandlung mindestens eines Teils der in (2) erhaltenen Mischung B und Erhalt einer Mischung C enthaltend Li₂CO₃;
(4) Umsetzung der in (3) enthaltenen Mischung C mit M(OH)₂ unter mindestens teilweiser Umsetzung des darin enthaltenen Li₂CO₃ zu LiOH und Erhalt einer Mischung D enthaltend LiOH, wobei M für ein Erdalkalimetall steht.

2. Das Verfahren nach Anspruch 1, wobei der Li₂CO₃-Gehalt der Mischung in A in (1) im Bereich von 0,1 bis 16,0 Gew.-%, bevorzugt im Bereich von 5 bis 12 Gew.-% liegt.

3. Das Verfahren nach Anspruch 1 oder 2, wobei die Bereitstellung der Mischung A nach (1) umfasst
(1.a) Bereitstellung einer Mischung M0 enthaltend ein oder mehrere lithiumhaltige Minerale;
(1.b) Kalzinieren der Mischung M0 unter Erhalt einer Mischung M1 enthaltend ein oder mehrere kalzinierte lithiumhaltige Minerale;
(1.c) Umsetzung der in (b) erhaltenen Mischung M1 mit einem Alkalimetallcarbonat, unter mindestens teilweiser Umsetzung des einen oder der mehreren kalzinierten lithiumhaltigen Minerals zu Li₂CO₃ und Erhalt einer Mischung A enthaltend Li₂CO₃.

4. Das Verfahren nach Anspruch 1 oder 2, wobei die Bereitstellung der Mischung A nach (1) umfasst
(1.a') Bereitstellung einer Mischung M0' enthaltend ein oder mehrere lithiumhaltige Minerale;
(1.b') Umsetzung der Mischung M0' mit einem Alkalimetallcarbonat unter mindestens teilweiser Umsetzung des einen oder der mehreren lithiumhaltigen Minerale zu Lᵢ₂CO₃ und Erhalt einer Mischung A enthaltend Li₂CO₃.

5. Das Verfahren nach einem der Ansprüche 1 bis 4, wobei während der Behandlung in (2) die Temperatur im Bereich von 0 bis 150 °C liegt.

6. Das Verfahren nach einem der Ansprüche 1 bis 5, wobei die Behandlung in (2) in wässriger Lösung stattfindet und CO₂ in die wässrige Lösung eingeleitet wird.

7. Das Verfahren nach Anspruch 6, wobei CO₂ in die wässrige Lösung mit einem Druck von 1 bis 15 bar (absolut) bar (absolut)eingeleitet wird.

8. Das Verfahren nach einem der Ansprüche 1 bis 7, wobei die Behandlung in (2) umfasst
(2.1) Behandlung der in (1) bereitgestellten Mischung A mit Kohlensäure unter mindestens teilweiser Umsetzung des darin enthaltenen Li₂CO₃ zu LiHCO₃;
(2.2) Fest-Flüssig-Trennschritt der in (2.1) erhaltenen Mischung, und Erhalt einer festen Mischung M4 enthaltend nicht reagiertes Li₂CO₃ und einer flüssigen Mischung B enthaltend LiHCO₃;
(2.3) Bereitstellung der Mischung M4 für die Behandlung in (2) als Quelle für Li₂CO₃.

9. Das Verfahren nach einem der Ansprüche 1 bis 8, wobei der pH-Wert der Mischung B erhalten in (2) im Bereich von 5 bis 8 liegt.

10. Das Verfahren nach einem der Ansprüche 1 bis 9, wobei die in (2) erhaltene Mischung B weniger als 30,0 Gew.-% Erdalkalimetale enthält.

11. Das Verfahren nach einem der Ansprüche 1 bis 10, wobei die Umsetzung in (3) weiterhin umfasst
(3.1) Umsetzung eines Teils der in (2) erhaltenen Mischung B mit M(OH)₂ unter mindestens teilweiser Umsetzung des darin enthaltenen LiHCOs zu LiOH und Erhalt einer Mischung D' enthaltend LiOH, wobei M für ein Erdalkalimetall steht.

12. Das Verfahren nach einem der Ansprüche 1 bis 11, wobei unabhängig voneinander während der Umsetzung in (4) und/oder (3.1) die Temperatur im Bereich von 10 bis 100 °C liegt.

13. Das Verfahren nach einer der Ausführungsformen 1 bis 12, wobei unabhängig voneinander das Erdalkalimetall M in (3) und/oder in (3.2) aus der Gruppe bestehend aus Barium, Calcium und Magnesium ausgewählt ist.

14. Das Verfahren nach einem der Ansprüche 1 bis 13, wobei die Abtrennung in (5) umfasst
(5.1) Fest-Flüssig-Trennschritt der in (4) erhaltenen Mischung D und/oder der in (3.1) erhaltenen Mischung D' und Erhalt einer festen Mischung M5 enthaltend CaCO₃ und einer flüssigen Mischung E enthaltend LiOH;
(5.2) Waschen der in (5.1) erhaltenen festen Mischung M5 mit Wasser und Erhalt von Waschwasser enthaltend LiOH,
(5.3) Bereitstellung mindestens eines Teils des in (5.2) erhaltenen Waschwassers enthaltend LiOH für die Umsetzung in (4), wobei mindestens ein Teil des Waschwassers enthaltend LiOH bevorzugt vor der Rückführung in (4) mit Erdalkalimetallhydroxid M(OH)₂ versetzt wird.

15. Das Verfahren nach Anspruch 14, wobei die Abtrennung in (5) weiterhin einen lonenaustausch umfasst, bevorzugt einen kationischen lonenaustausch.
